# EUROPEAN PATENT APPLICATION

(11) **EP 4 467 397 A1**
(43) Date of publication of application: **27.11.2024**
(21) Application number: 23743350.3
(22) Date of filing: 20.01.2023
(51) Int. Cl.: B60R 19/04, B60R 19/18

(54) **BUMPER REINFORCEMENT WITH OPEN CROSS SECTION**

(30) Priority: 20.01.2022 JP 2022006845
(71) Applicant: NIPPON STEEL CORPORATION, Chiyoda-ku Tokyo 100-8071 (JP)
(72) Inventor: SAITO Masahiro, Tokyo 100-8071 (JP); ITO Yasuhiro, Tokyo 100-8071 (JP); YOSHIDA Hiroshi, Tokyo 100-8071 (JP); SUZUKI Junichiro, Tokyo 100-8071 (JP); YUASA Susumu, Tokyo 100-8071 (JP)
(74) Representative: Vossius & Partner Patentanwälte Rechtsanwälte mbB
(86) International application number: PCT/JP2023/001730
(87) International publication number: WO 2023/140358

(57) **Abstract**

A top sheet (210), two walls (221, 222), and two ridge portions (231, 232) are provided, tensile strengths of the top sheet (210) and the walls (221, 222) are 1470 MPa or more, each of the two ridge portions (231, 232) extend between the top sheet (210) and the walls (221, 222), in a longitudinal direction of the top sheet (210), and a cross section of a center portion in the longitudinal direction is an open cross section having a groove shape. In the cross section, the top sheet (210) includes a central groove part (260) extending in the longitudinal direction at a center of a width and a small groove part between the central groove part (260) and each of the ridge portions (231, 232), and a depth of the groove part at the center is 15 times or more and 25 times or less a sheet thickness of the top sheet (210), a depth of each of the small groove parts (240, 250) is 2 times or more and 13 times or less the sheet thickness, and an interval between each of the small groove parts (240, 250) and the ridge portion (231, 232) is 30 times or less the sheet thickness.

## Description

### [Technical Field of the Invention]

The present disclosure relates to an open cross section bumper reinforcement.

The present application claims priority based on Japanese Patent Application No. 2022-006845 filed in Japan on January 20, 2022, the contents of which are incorporated herein by reference.

### [Related Art]

Conventionally, members obtained by processing metal sheet-shaped members into predetermined cross-sectional shapes have been used as frame members of automobiles. When an impact due to a collision is applied to a product having a frame member, the frame member is required to implement a desired deformation mode and efficiently absorb the impact. For example, Patent Document 1 discloses a bumper reinforcing material provided with a small groove part and a large groove part surrounding the small groove part with the object of increasing a peak load or increasing an energy absorption amount.

Such a frame member is required to achieve a decrease in weight and have a sufficient load bearing capacity. In recent years, there has been a demand for members having high strength and light weight with tightening of collision safety standards of vehicles such as automobiles and tightening of fuel consumption regulations. In order to meet such a demand, development of a lightweight frame member employing a so-called high strength material having high tensile strength has been advanced.

### [Citation List]

### [Patent Document]

[Patent Document 1]
Japanese Patent Publication No. 5329188

### [Summary of Invention]

### [Problems to be Solved by the Invention]

A bumper reinforcement used for a bumper of a vehicle absorbs an impact by a deformation of a member when the vehicle collides. If the bumper reinforcement fractures, the impact cannot be absorbed, and thus, the bumper reinforcement is required not to fracture to a certain deformation amount when the vehicle collides. When a high strength material is used for the member, the performance of the member can be enhanced. Although it is possible to increase the strength and decrease the weight of the member when the high strength material is used, there is a problem that the high strength material is poor in ductility so that the member is likely to fracture at the time of deformation. Therefore, there is a restriction in a case where the high strength material is used for the bumper reinforcement.

The present disclosure has been made in view of the above, and an object thereof is to provide an open cross section bumper reinforcement capable of suppressing fracture caused by deformation generated when a member receives an impact.

### [Means for Solving the Problem]

(1) An open cross section bumper reinforcement according to an aspect of the present disclosure includes:
   a top sheet, two walls, and two ridge portions,
   in which tensile strengths of the top sheet and the walls are 1470 MPa or more,
   each of the two ridge portions extend between the top sheet and the walls, in a longitudinal direction of the top sheet,
   a cross section of a center portion in the longitudinal direction is an open cross section having a groove shape,
   in the cross section, the top sheet includes a central groove part extending in the longitudinal direction at a center of a width,
   in the cross section, the top sheet includes a small groove part between the central groove part and each of the ridge portions,
   in the cross section, a depth of the central groove part at the center is 15 times or more and 25 times or less a sheet thickness of the top sheet,
   a depth of each of the small groove parts is 2 times or more and 13 times or less the sheet thickness of the top sheet, and
   an interval between each of the small groove parts and each of the ridge portions is 30 times or less the sheet thickness of the top sheet.
(2) In the open cross section bumper reinforcement according to (1), in which
   in the cross section,
   a total of an extension length of a flat part (L1, L2) between each of the ridge portions and each of the small groove parts and an extension length of a flat part (L3, L4) between the central groove part and each of the small groove parts may be 18% or less of an interval between the ridge portions.
(3) In the open cross section bumper reinforcement according to (1), in which
   in the cross section,
   each of the central groove part and each of the small groove parts may include a flat bottom portion, and
   a total of an extension length (L7) of the bottom portion of the central groove part, an extension length of the bottom portion (L5, L6) of each of the small groove parts, an extension length of a flat part (L1, L2) between each of the ridge portions and each of the small groove parts, and an extension length of the flat part (L3, L4) between the central groove part and each of the small groove parts may be 25% or less of an interval between the ridge portions.
(4) In the open cross section bumper reinforcement according to any one of (1) to (3), in which
   in the cross section,
   a width of each of the small groove parts may be 5 times or more and 30 times or less the sheet thickness.
(5) In the impact-absorbing member according to any one of (1) to (4), in which
   the tensile strengths of the top sheet and the walls may be 1760 MPa or more.

### [Effects of the Invention]

According to the open cross section bumper reinforcement of the present disclosure, it is possible to suppress the fracture caused by the deformation generated when the member receives the impact.

### [Brief Description of the Drawings]

FIG. 1 is a schematic perspective view of an open cross section bumper reinforcement according to an embodiment of the present disclosure.
FIG. 2 is a schematic cross section of the open cross section bumper reinforcement according to the embodiment of the present disclosure.
FIG. 3 is a schematic cross section illustrating the vicinity of a groove part of the open cross section bumper reinforcement according to the embodiment of the present disclosure.
FIG. 4 is a schematic cross section illustrating an example of one groove part of the open cross section bumper reinforcement according to the embodiment of the present disclosure.
FIG. 5 is a schematic cross section illustrating an example of another groove part of the open cross section bumper reinforcement according to the embodiment of the present disclosure.
FIG. 6 is a schematic cross-sectional view illustrating an example of a central groove part of the open cross section bumper reinforcement according to the embodiment of the present disclosure.
FIG. 7 is a schematic cross section of the open cross section bumper reinforcement according to the embodiment of the present disclosure.
FIG. 8 is a schematic top view of the open cross section bumper reinforcement according to the embodiment of the present disclosure, and is a view of the open cross section bumper reinforcement as viewed from a direction perpendicular to a sheet surface of a first sheet portion.
FIG. 9 is a view for describing a modification example of the groove part or the central groove part according to the present disclosure, and is a schematic cross section illustrating the vicinity of a groove part of an open cross section bumper reinforcement.
FIG. 10 is a view for describing another modification example of the groove part or the central groove part according to the present disclosure, and is a schematic cross section illustrating the vicinity of a groove part of an open cross section bumper reinforcement.
FIG. 11 is a graph showing results of Example 1 of the present disclosure.
FIG. 12 is a schematic top view of the open cross section bumper reinforcement according to the embodiment of the present disclosure, and is a view illustrating a deformation mode when a depth of the groove part is 1 time a sheet thickness.
FIG. 13 is a schematic top view of the open cross section bumper reinforcement according to the embodiment of the present disclosure, and is a view illustrating a deformation mode when the depth of the groove part is 2 times the sheet thickness.
FIG. 14 is a schematic top view of the open cross section bumper reinforcement according to the embodiment of the present disclosure, and is a view illustrating a deformation mode when the depth of the groove part is 13 times the sheet thickness.
FIG. 15 is a schematic top view of the open cross section bumper reinforcement according to the embodiment of the present disclosure, and is a view illustrating a deformation mode when the depth of the groove part is 17.8 times the sheet thickness.
FIG. 16 is a graph showing the relationship between the depth of the groove part and an opening angle between side walls when the open cross section bumper reinforcement according to the embodiment of the present disclosure is deformed by an external force.
FIG. 17 is a graph showing the relationship between the depth of the groove part and plastic strain when the open cross section bumper reinforcement according to the embodiment of the present disclosure is deformed by an external force.
FIG. 18 is a schematic top view of the open cross section bumper reinforcement according to the embodiment of the present disclosure, and is a view illustrating a deformation mode when a depth of the central groove part is less than 15 times a sheet thickness of a top sheet.
FIG. 19 is a schematic cross section of the open cross section bumper reinforcement according to the embodiment of the present disclosure, and is a view illustrating the deformation mode when the depth of the central groove part is less than 15 times the sheet thickness of the top sheet.
FIG. 20 is a schematic top view of the open cross section bumper reinforcement according to the embodiment of the present disclosure, and is a view illustrating a deformation mode when the depth of the central groove part is 15 times or more the sheet thickness of the top sheet.
FIG. 21 is a schematic cross section of the open cross section bumper reinforcement according to the embodiment of the present disclosure, and is a view illustrating the deformation mode when the depth of the central groove part is 15 times or more the sheet thickness of the top sheet.

### [Embodiment of the Invention]

Hereinafter, an embodiment of the present disclosure will be described with reference to examples, but it is obvious that the present disclosure is not limited to the examples described below. In the following description, specific numerical values and materials are sometimes exemplified, but other numerical values and materials may be applied as long as the effects of the present disclosure can be obtained. In addition, constituent elements of the following embodiment can be combined with each other.

### [Embodiment]

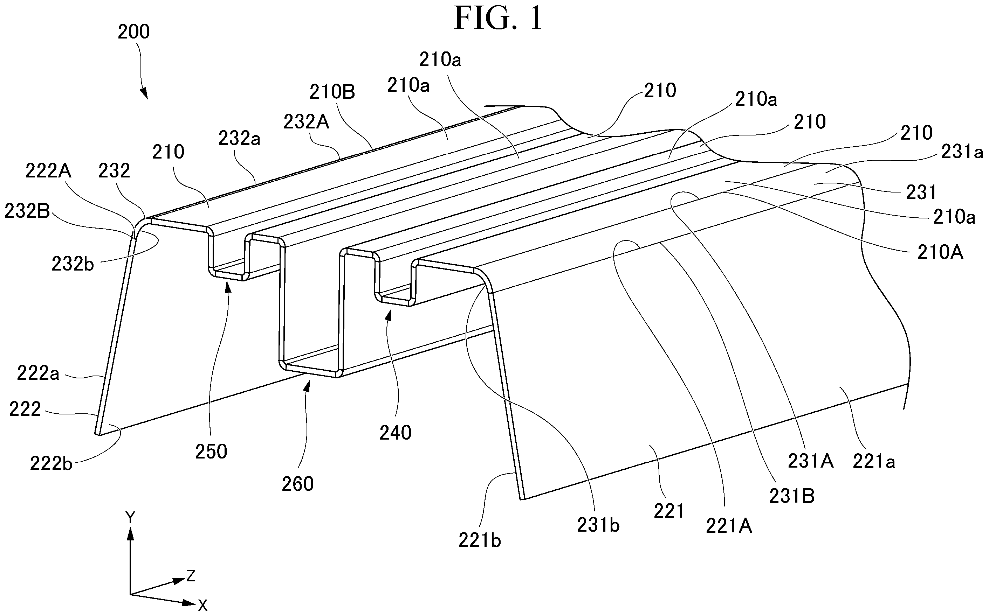

FIG. 1 illustrates an open cross section bumper reinforcement according to an embodiment. The open cross section bumper reinforcement refers to a bumper reinforcement having an open cross section whose cross section has a groove shape. In the present disclosure, the cross section of the open cross section bumper reinforcement refers to a cross section orthogonal to a longitudinal direction of the open cross section bumper reinforcement. FIG. 1 is a perspective view of an open cross section bumper reinforcement 200. A cross section of the open cross section bumper reinforcement 200 on the front side in FIG. 1 is a cross section crossing a center position in the longitudinal direction of the open cross section bumper reinforcement 200. As illustrated in FIG. 1, the open cross section bumper reinforcement 200 according to the embodiment is a groove-shaped member. A groove-shaped bottom portion is also referred to as a top sheet portion (top sheet) or a first sheet portion 210. When the open cross section bumper reinforcement is mounted on a vehicle, the bottom portion is disposed to be oriented in a traveling direction (vehicle length direction) of the vehicle. Groove-shaped side walls (walls) are also referred to as second sheet portions 221 and 222. The side walls are on side portions of the bottom portion and are disposed to be oriented in a vehicle height direction of the vehicle. Specifically, the open cross section bumper reinforcement 200 has the following constitution.

That is, the open cross section bumper reinforcement 200 includes the first sheet portion 210 (top sheet), the two second sheet portions 221 and 222 (walls), and two ridge portions 231 and 232. The two ridge portions 231 and 232 extend between the first sheet portion 210 and the second sheet portion 221 and between the first sheet portion 210 and the second sheet portion 222, respectively, in a longitudinal direction of the first sheet portion 210.

The open cross section bumper reinforcement 200 has an open cross section with a groove-shaped cross section at the center portion in the longitudinal direction.

In the open cross section bumper reinforcement 200, in the cross section, the first sheet portion 210 includes a central groove part 260 extending in the longitudinal direction at the center of a width, and a groove part 240 and a small groove part 250 (small groove parts) disposed between the central groove part 260 and the ridge portion 231 and between the central groove part 260 and the ridge portion 232, respectively. The open cross section bumper reinforcement 200 is an elongated member and has the longitudinal direction and a short direction orthogonal to the longitudinal direction. The longitudinal direction is a direction in which the open cross section bumper reinforcement 200 as the elongated member extends. Note that the longitudinal direction of the open cross section bumper reinforcement 200 is parallel to a Z coordinate axis in FIG. 1. An X coordinate axis and a Y coordinate axis in FIG. 1 are parallel to the short direction of the open cross section bumper reinforcement 200. The X coordinate axis, the Y coordinate axis, and the Z coordinate axis in FIG. 1 are orthogonal to each other. That is, when the open cross section bumper reinforcement is mounted on the vehicle, the X coordinate axis is the vehicle height direction, the Y coordinate axis is the vehicle length direction, and the Z coordinate axis is a vehicle width direction.

In the example of FIG. 1, the first sheet portion 210 is a substantially flat sheet-shaped portion except for the groove part 240, the groove part 250, and the central groove part 260, which will be described later, and extends in the longitudinal direction of the open cross section bumper reinforcement 200. The first sheet portion 210 has a constant sheet thickness. In the open cross section bumper reinforcement 200, a face of the first sheet portion 210 outside the groove shape is referred to as a top sheet surface 210a, and a face of the first sheet portion 210 inside the groove shape is referred to as a top sheet rear surface 210b. When a direction parallel to the longitudinal direction of the open cross section bumper reinforcement 200 is defined as a length direction of the first sheet portion 210, the first sheet portion 210 has a constant length in the length direction of the first sheet portion 210.

The second sheet portion 221 and the second sheet portion 222 are substantially flat sheet-shaped portions, and extend in the longitudinal direction of the open cross section bumper reinforcement 200. The second sheet portion 221 has a constant sheet thickness. In the open cross section bumper reinforcement 200, faces of the second sheet portion 221 and the second sheet portion 222 outside the groove shape are referred to as a wall surface 221a and a wall surface 222a, respectively, and faces of the second sheet portion 221 and the second sheet portion 222 inside the groove shape are referred to as a wall rear surface 221b and a wall surface 222b, respectively. When directions parallel to the longitudinal direction of the open cross section bumper reinforcement 200 are defined as length directions of the second sheet portion 221 and the second sheet portion 222, the second sheet portion 221 and the second sheet portion 222 have constant lengths in the length directions of the second sheet portion 221 and the second sheet portion 222, respectively. When a direction orthogonal to the length direction of the second sheet portion 221 and a sheet thickness direction of the second sheet portion 221 is defined as a width direction of the second sheet portion 221, the second sheet portion 221 has a constant length in the width direction of the second sheet portion 221. When a direction orthogonal to the length direction of the second sheet portion 222 and a sheet thickness direction of the second sheet portion 222 is defined as a width direction of the second sheet portion 222, the second sheet portion 222 has a constant length in the width direction of the second sheet portion 222. Note that the first sheet portion 210, the second sheet portion 221, and the second sheet portion 222 may be provided with holes, notches, beads, welds, or the like.

The ridge portion 231 is a portion connecting the first sheet portion 210 and the second sheet portion 221, and extends in the longitudinal direction of the open cross section bumper reinforcement 200. Since the second sheet portion 221 is inclined with respect to the first sheet portion 210, the ridge portion 231 connecting the both has a curved shape so as to draw a curve in the cross section of the open cross section bumper reinforcement 200. Similarly, the ridge portion 232 is a portion connecting the first sheet portion 210 and the second sheet portion 222, and extends in the longitudinal direction of the open cross section bumper reinforcement 200. Since the second sheet portion 222 is inclined with respect to the first sheet portion 210, the ridge portion 232 connecting the both has a curved shape so as to draw a curve in the cross section of the open cross section bumper reinforcement 200.

The inclination of the second sheet portion 221 with respect to the first sheet portion 210 means a state in which a sheet surface of the first sheet portion 210 and a sheet surface of the second sheet portion 221 are not parallel. Similarly, the inclination of the second sheet portion 222 with respect to the first sheet portion 210 means a state in which the sheet surface of the first sheet portion 210 and a sheet surface of the second sheet portion 222 are not parallel. In addition, a direction parallel to the longitudinal direction of the open cross section bumper reinforcement 200 is defined as a length direction of the ridge portion 231 or the ridge portion 232. A face of the ridge portion 231 outside bending is defined as a ridge outer surface 231a, and a face of the ridge portion 231 inside bending is defined as a ridge inner surface 231b. The top sheet surface 210a and the wall surface 221a are connected to the ridge outer surface 231a, and the top sheet rear surface 210b and the wall rear surface 221b are connected to the ridge inner surface 231b. Similarly, a face of the ridge portion 232 outside bending is defined as a ridge outer surface 232a, and a face of the ridge portion 232 inside bending is referred to as a ridge inner surface 232b. The top sheet surface 210a and the wall surface 221a are connected to the ridge outer surface 232a, and the top sheet rear surface 210b and the wall rear surface 221b are connected to the ridge inner surface 232b. The ridge outer surface 231a side (or the ridge outer surface 232a side) may be referred to as the outside of the open cross section bumper reinforcement 200, and the ridge inner surface 231b side (or the ridge inner surface 232b side) may be referred to as the inside of the open cross section bumper reinforcement 200. Specifically, the ridge portion 231 or the ridge portion 232 means a range in which a radius of curvature R of the ridge outer surface 231a or the ridge outer surface 232a is 30 mm or less in the cross section of the open cross section bumper reinforcement 200. A point where the radius of curvature R exceeds 30 mm is regarded to be included in the first sheet portion 210, the second sheet portion 221, or the second sheet portion 222.

One edge portion (a first sheet portion edge portion 210A) of the first sheet portion 210 extending in the longitudinal direction of the open cross section bumper reinforcement 200 is connected to one edge portion (a ridge edge portion 231A) of one ridge portion 231 extending in the longitudinal direction of the open cross section bumper reinforcement 200. An edge portion (a second sheet portion edge portion 221A) of one second sheet portion 221 extending in the longitudinal direction of the open cross section bumper reinforcement 200 is connected to the other edge portion (a ridge edge portion 231B) extending in the longitudinal direction of the ridge portion 231. In addition, the other edge portion (a first sheet portion edge portion 210B) of the first sheet portion 210 extending in the longitudinal direction of the open cross section bumper reinforcement 200 is connected to one edge portion (a ridge edge portion 232A) of the other ridge portion 232 extending in the longitudinal direction of the open cross section bumper reinforcement 200. An edge portion (a second sheet portion edge portion 222A) of the other second sheet portion 222 extending in the longitudinal direction of the open cross section bumper reinforcement 200 is connected to the other edge portion (a ridge edge portion 232B) extending in the longitudinal direction of the ridge portion 232.

The first sheet portion 210 is provided with the groove part 240 and the groove part 250 which pass through the center position in the longitudinal direction of the open cross section bumper reinforcement 200 and extend along the ridge portion 231.

Here, if the open cross section bumper reinforcement 200 is deformed such that the width of the first sheet portion 210 is narrowed when absorbing an impact at the time of collision, there is a concern that cross sections of central groove part side portion-side ridge portions 266 and 267 of the central groove part 260, which will be described later, are deformed to acute angles so that the central groove part side portion-side ridge portions 266 and 267 fracture. In this regard, the groove part 240 and the groove part 250 are provided in order to relax the deformations of the central groove part side portion-side ridge portions 266 and 267. In the embodiment, depths d1 and d2 of the groove part 240 and the groove part 250 are shallower than that of the central groove part 260 (details will be described later).

When directions parallel to the longitudinal direction of the open cross section bumper reinforcement 200 are defined as length directions of the groove part 240 and the groove part 250, the groove part 240 and the groove part 250 have constant lengths in the length direction, respectively. The center position in the longitudinal direction of the open cross section bumper reinforcement 200 means a position included in a range of 20% of a length of the open cross section bumper reinforcement 200 in the longitudinal direction from a center position that bisects the length of the open cross section bumper reinforcement 200 in the longitudinal direction. The extension of the groove part 240 (or the groove part 250) along the ridge portion 231 (or the ridge portion 232) means that the groove part 240 (or the groove part 250) is disposed to be substantially parallel to a part of the adjacent ridge portion 231 (or ridge portion 232).

The first sheet portion 210 is provided with the central groove part 260 which passes through the center position in the longitudinal direction of the open cross section bumper reinforcement 200 and extends in the longitudinal direction of the open cross section bumper reinforcement 200. The central groove part 260 is located between the groove part 240 and the groove part 250. When a direction parallel to the longitudinal direction of the open cross section bumper reinforcement 200 is defined as a length direction of the central groove part 260, the central groove part 260 has a constant length in the length direction. The groove part 240, the groove part 250, and the central groove part 260 may extend substantially parallel to each other.

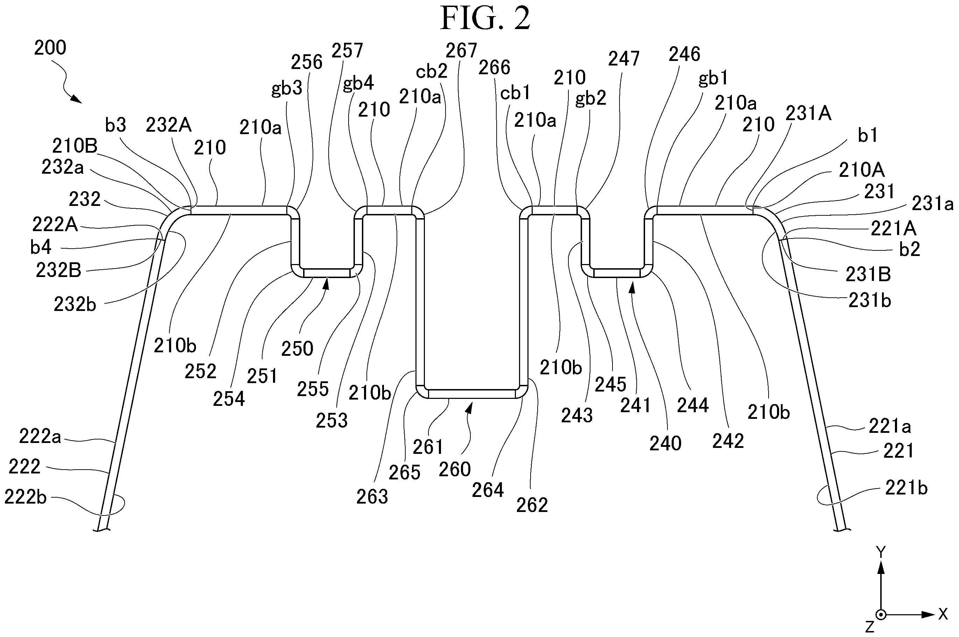

FIG. 2 is a cross section of the open cross section bumper reinforcement 200 of FIG. 1 at the center position in the longitudinal direction. The groove part 240, the groove part 250, and the central groove part 260 protrude in a direction intersecting the sheet surface of the first sheet portion 210 (the top sheet surface 210a and the top sheet rear surface 210b opposite to the top sheet surface 21 0a). In the example of FIG. 2, the groove part 240, the groove part 250, and the central groove part 260 protrude to a side where the second sheet portion 221 and the second sheet portion 222 are located (the top sheet rear surface 210b side) from the first sheet portion 210.

In the open cross section bumper reinforcement 200 according to the embodiment, in the cross section at the center position in the longitudinal direction of the open cross section bumper reinforcement 200, when an average sheet thickness of the first sheet portion 210 is denoted by t, a part of the groove part 240 is located in a range of 30t from a boundary b1 between the first sheet portion 210 and one ridge portion 231 to the first sheet portion 210 side in a direction parallel to the sheet surface of the first sheet portion 210. In other words, at the center position in the longitudinal direction of the open cross section bumper reinforcement 200, an interval between the groove part 240 and the ridge portion 231 is 30 times or less the sheet thickness of the first sheet portion 210. Note that the interval in the present disclosure refers to a so-called distance between end portions, and is not a distance between centers. In addition, on a plane orthogonal to the longitudinal direction of the open cross section bumper reinforcement 200 at the center position in the longitudinal direction of the open cross section bumper reinforcement 200, a part of the groove part 250 is located in a range of 30t from a boundary b3 between the first sheet portion 210 and the other ridge portion 232 to the first sheet portion 210 side in the direction parallel to the sheet surface of the first sheet portion 210. In other words, at the center position in the longitudinal direction of the open cross section bumper reinforcement 200, an interval between the groove part 250 and the ridge portion 232 is 30 times or less the sheet thickness of the first sheet portion 210.

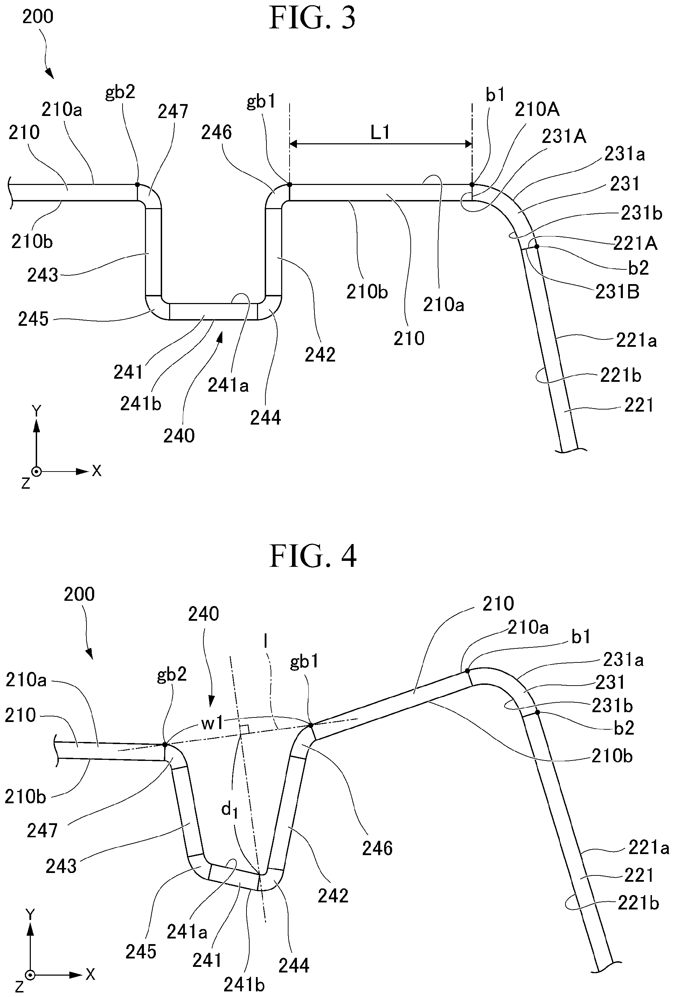

FIG. 3 is a cross section in the vicinity of the groove part 240 of the open cross section bumper reinforcement 200 of FIG. 2. FIG. 3 is the cross section of the open cross section bumper reinforcement 200 of FIG. 1 at the center position in the longitudinal direction.

In the example of FIG. 3, the groove part 240 includes a groove part bottom portion 241 and a pair of groove part side portions 242 and 243. The groove part bottom portion 241 is connected to the groove part side portions 242 and 243 via a pair of groove part bottom portion-side ridge portions 244 and 245 at end portions, respectively. The groove part side portions 242 and 243 are connected to the first sheet portion 210 via groove part side portion-side ridge portions 246 and 247, respectively. The groove part bottom portion 241, the groove part side portions 242 and 243, the groove part bottom portion-side ridge portions 244 and 245, and the groove part side portion-side ridge portions 246 and 247 extend in the length direction of the groove part 240. Each of these ridge portions means a range where the radius of curvature R outside the ridge portion is 30 mm or less in the cross section of the open cross section bumper reinforcement 200. A point where the radius of curvature R exceeds 30 mm is regarded to be included in the groove part bottom portion 241, the groove part side portion 242, or the groove part side portion 243. The groove part bottom portion 241 has a bottom portion inner surface 241a located inside the groove part 240 (on a side where the groove part side portions 242 and 243 are located) and a bottom portion outer surface 241b opposite to the bottom portion inner surface 241a.

In the cross section of the open cross section bumper reinforcement 200, a boundary closer to the ridge portion 231 (a boundary between the first sheet portion 210 and the groove part side portion-side ridge portion 246) among boundaries between the first sheet portion 210 and the groove part 240 (boundaries between the first sheet portion 210 and each of the groove part side portion-side ridge portions 246 and 247) is defined as a groove part boundary gb1, and the other boundary (boundary between the first sheet portion 210 and the groove part side portion-side ridge portion 247) is defined as a groove part boundary gb2. As illustrated in FIG. 3, in the cross section at the center position in the longitudinal direction of the open cross section bumper reinforcement 200, a distance L1 from the boundary b1 to the groove part boundary gb1 in the direction parallel to the sheet surface of the first sheet portion 210 is less than 30t.

As illustrated in FIG. 3, the boundary b1 between the first sheet portion 210 and the ridge portion 231 means a position where the first sheet portion edge portion 210A and the ridge edge portion 231A are in contact with each other. The direction parallel to the sheet surface of the first sheet portion 210 means a direction parallel to the sheet surface of the first sheet portion 210 in a range from the boundary b1 to the groove part 240 in the cross section of the open cross section bumper reinforcement 200. A part of the groove part 240 being located in the above range means that at least a part (the groove part bottom portion 241, the groove part side portions 242 and 243, the groove part bottom portion-side ridge portions 244 and 245, or the groove part side portion-side ridge portions 246 and 247) of the groove part 240 is present in the above range.

A distance between the groove part boundary gb1 and the groove part boundary gb2 in the cross section of the open cross section bumper reinforcement 200 is defined as a width w1 of the groove part 240. The width w1 of the groove part 240 is not necessarily constant in the longitudinal direction of the open cross section bumper reinforcement 200.

As illustrated in FIG. 4, a distance from an inner surface (the bottom portion inner surface 241a) of the groove part farthest from a straight line 1 to the straight line 1 in a direction orthogonal to the straight line 1 passing through the boundaries gb1 and gb2 in the cross section of the open cross section bumper reinforcement 200 is defined as the depth d1 of the groove part 240.

Here, when the open cross section bumper reinforcement 200 absorbs an impact at the time of collision, the groove part boundary gb1 and the groove part boundary gb2 approach each other, and an opening angle between the second sheet portion 221 and the second sheet portion 222 increases. At this time, the opening angle between the second sheet portion 221 and the second sheet portion 222 increases as the depth d1 of the groove part 240 increases.

When the depth d1 of the groove part 240 is small and the opening angle between the second sheet portion 221 and the second sheet portion 222 is small, strain concentrates on central groove part side portions 262 and 263 and the central groove part side portion-side ridge portions 266 and 267, which will be described later, of the central groove part 260, and there is a concern that fracture occurs at such a point where strain concentrates.

When the depth d1 of the groove part 240 is large and the opening angle between the second sheet portion 221 and the second sheet portion 222 is large, strain concentrates on the groove part side portions 242 and 243 and the groove part side portion-side ridge portions 246 and 247 of the groove part 240, and there is a concern that fracture occurs at such a point where strain concentrates.

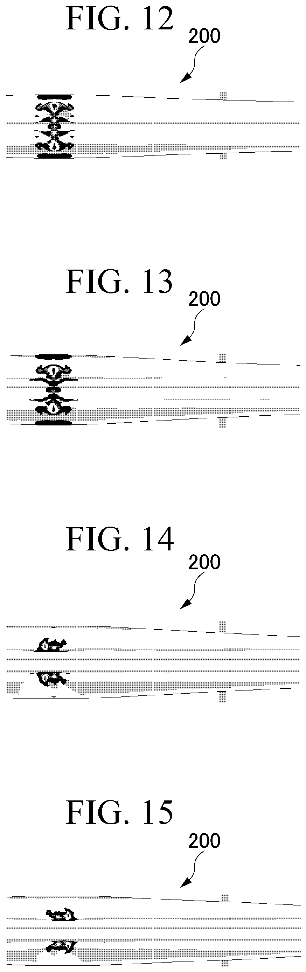

FIGS. 12 to 15 are views illustrating deformation states of the open cross section bumper reinforcement 200 at a stroke of 70 mm when each of the depth d1 of the groove part 240 and the depth d2 (which will be described later) of the groove part 250 is set to 1.4 mm, 2.8 mm, 18.2 mm, and 25.0 mm, respectively. Note that an average sheet thickness t of the open cross section bumper reinforcement 200 is 1.4 mm. In other words, the depth d1 of the groove part 240 and the depth d2 of the groove part 250 in FIGS. 12 to 15 are 1t, 2t, 13t, and 17.8t, respectively.

In addition, in FIGS. 12 to 15, the central groove part 260 has a width of 14 mm and a depth of 23 mm. A radius of curvature of each of central groove part bottom portion-side ridge portions 264 and 265 is 6 mm. A radius of curvature of each of the groove part side portion-side ridge portions 246, 247, 256, and 257 is 5 mm. A radius of curvature of each of the groove part bottom portion-side ridge portions 244, 245, 254, and 255 is 4 mm. A radius of curvature of each of the ridge portions 231 and 232 is 8 mm. Center-to-center distances between the central groove part 260 and each of the groove parts 240 and 250 in the width direction are each 32.97 mm. Distances between the boundary b1 and the groove part boundary gb1 and between the boundary b3 and a groove part boundary gb3 are each 17.66 mm.

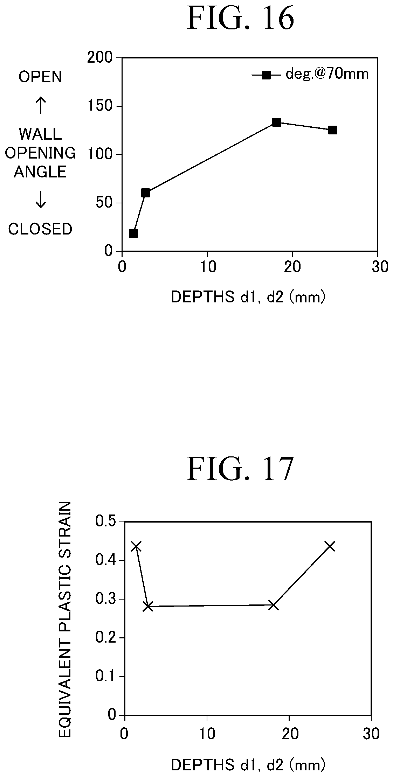

FIG. 16 is a graph showing the relationship between sizes of the depth d1 of the groove part 240 and the depth d2 of the groove part 250 and the opening angle between the second sheet portion 221 and the second sheet portion 222 at the time of deformation of the open cross section bumper reinforcement 200 at a stroke of 70 mm under the above-described conditions. FIG. 17 is a graph showing the relationship between the sizes of the depth d1 of the groove part 240 and the depth d2 of the groove part 250 and an amount of equivalent plastic strain at the time of deformation of the open cross section bumper reinforcement 200 at a stroke of 70 mm under the above-described conditions.

From FIGS. 12 to 15 and 16, it can be seen that the opening angle between the second sheet portion 221 and the second sheet portion 222 tends to increase as the depth d1 of the groove part 240 and the depth d2 of the groove part 250 increase.

When a fracture threshold is set to 0.3 in FIG. 17, it can be seen that the fracture threshold is exceeded in a case where the depth d1 of the groove part 240 and the depth d2 of the groove part 250 are 2.8 mm or less or 18.2 mm or more. That is, when the depth d1 of the groove part 240 and the depth d2 of the groove part 250 are 2.8 mm or less, the opening angle between the second sheet portion 221 and the second sheet portion 222 becomes small, and thus, it is considered that strain concentrates on the central groove part side portions 262 and 263 and the central groove part side portion-side ridge portions 266 and 267 of the central groove part 260. When the depth d1 of the groove part 240 and the depth d2 of the groove part 250 are 18.2 mm or more, the opening angle between the second sheet portion 221 and the second sheet portion 222 increases, and thus, it is considered that strain concentrates on the groove part side portions 242 and 243 and the groove part side portion-side ridge portions 246 and 247 of the groove part 240, and the groove part side portions 252 and 253 and the groove part side portion-side ridge portions 256 and 257 of the groove part 250.

In order to avoid such local concentration of strain, the depth d1 of the groove part 240 is preferably set as follows. That is, the depth d1 of the groove part 240 is preferably 2t to 13t in the cross section in the longitudinal direction of the open cross section bumper reinforcement 200 at the center position in the longitudinal direction of the open cross section bumper reinforcement 200. In other words, the depth of the groove part 240 is preferably 2 times or more and 13 times or less the sheet thickness of the first sheet portion 210 in the cross section of the center portion in the longitudinal direction of the open cross section bumper reinforcement 200. Since the depth d1 of the groove part 240 is 2t to 13t, there is an advantage that the deformation of the first sheet portion 210 at the time of collision can be relaxed and the generated strain can be suppressed. The depth d1 of the groove part 240 is more preferably 4t to 10t. Note that the depth d1 of the groove part 240 is not necessarily constant in the longitudinal direction of the open cross section bumper reinforcement 200.

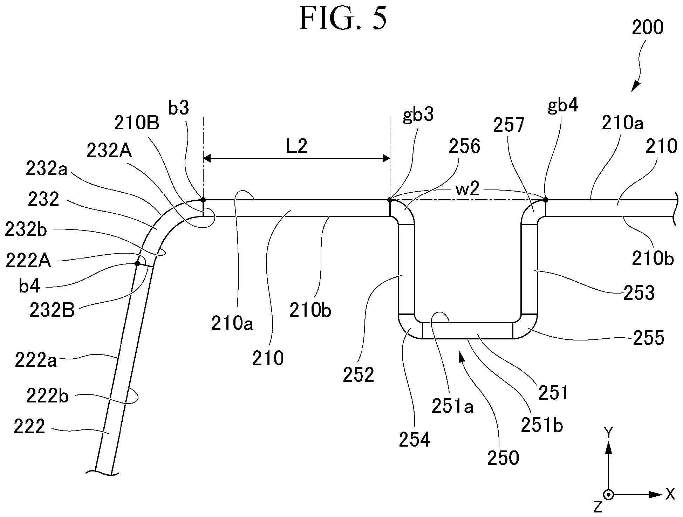

In addition, the constitution of the groove part 250 is similar to that of the groove part 240 as illustrated in FIG. 5. The groove part 250 includes a groove part bottom portion 251 and a pair of groove part side portions 252 and 253. The groove part bottom portion 251 is connected to the groove part side portions 252 and 253 via the pair of groove part bottom portion-side ridge portions 254 and 255 at end portions, respectively. The groove part side portions 252 and 253 are connected to the first sheet portion 210 via the groove part side portion-side ridge portions 256 and 257, respectively. The groove part bottom portion 251, the groove part side portions 252 and 253, the groove part bottom portion-side ridge portions 254 and 255, and the groove part side portion-side ridge portions 256 and 257 extend in the length direction of the groove part 250. Each of these ridge portions means a range in which the radius of curvature R outside the ridge portion is 30 mm or less on the plane orthogonal to the longitudinal direction of the open cross section bumper reinforcement 200. A point where the radius of curvature R exceeds 30 mm is regarded to be included in the groove part bottom portion 251, the groove part side portion 252, or the groove part side portion 253. The groove part bottom portion 251 has a bottom portion inner surface 251a located inside the groove part 250 (on a side where the groove part side portions 252 and 253 are located) and a bottom portion outer surface 251b opposite to the bottom portion inner surface 251a.

In the cross section of the open cross section bumper reinforcement 200, a boundary closer to the ridge portion 232 (a boundary between the first sheet portion 210 and the groove part side portion-side ridge portion 256) among boundaries between the first sheet portion 210 and the groove part 250 (boundaries between the first sheet portion 210 and each of the groove part side portion-side ridge portions 256 and 257) is defined as the groove part boundary gb3, and the other boundary (boundary between the first sheet portion 210 and the groove part side portion-side ridge portion 257) is defined as a groove part boundary gb4. As illustrated in FIG. 5, in the cross section at the center position in the longitudinal direction of the open cross section bumper reinforcement 200, a distance L2 from the boundary b3 to the groove part boundary gb3 in the direction parallel to the sheet surface of the first sheet portion 210 is less than 30t.

As illustrated in FIG. 5, the boundary b3 between the first sheet portion 210 and the ridge portion 232 means a position where the first sheet portion edge portion 210B and the ridge edge portion 232A are in contact with each other. The direction parallel to the sheet surface of the first sheet portion 210 means a direction parallel to the sheet surface of the first sheet portion 210 in a range from the boundary b3 to the groove part 250 in the cross section of the open cross section bumper reinforcement 200. A part of the groove part 250 being located in the above range means that at least a part (the groove part bottom portion 251, the groove part side portions 252 and 253, the groove part bottom portion-side ridge portions 254 and 255, or the groove part side portion-side ridge portions 256 and 257) of the groove part 250 is present in the above range.

A distance between the groove part boundary gb3 and the groove part boundary gb4 in the cross section of the open cross section bumper reinforcement 200 is defined as a width w2 of the groove part 250. The width w2 of the groove part 250 is not necessarily constant in the longitudinal direction of the open cross section bumper reinforcement 200.

In addition, similarly to the case of the groove part 240, a distance from an inner surface (the bottom portion inner surface 251a) of the groove part farthest from a straight line 1 to the straight line 1 in a direction orthogonal to the straight line 1 passing through the boundaries gb3 and gb4 in the cross section of the open cross section bumper reinforcement 200 is defined as the depth d2 of the groove part 250.

In this case, similarly to the condition of the groove part 240 described above, the depth d2 of the groove part 250 is preferably 2t to 13t in the cross section at the center position in the longitudinal direction of the open cross section bumper reinforcement 200. In other words, the depth of the groove part 250 is preferably 2 times or more and 13 times or less the sheet thickness of the first sheet portion 210 in the cross section of the center portion in the longitudinal direction of the open cross section bumper reinforcement 200. Since the depth d2 of the groove part 250 is 2t to 13t, there is an advantage that the deformation of the first sheet portion 210 at the time of collision can be relaxed and the generated strain can be suppressed. The depth d2 of the groove part 250 is more preferably 4t to 10t. Note that the depth d2 of the groove part 250 is not necessarily constant in the longitudinal direction of the open cross section bumper reinforcement 200.

Note that, as illustrated in FIG. 3, the boundary b1 and the boundary b2 are points on the sheet surfaces of the ridge portion 231 outside bending on the plane orthogonal to the longitudinal direction of the open cross section bumper reinforcement 200 at the center position in the longitudinal direction of the open cross section bumper reinforcement 200. Also, as illustrated in FIG. 3, the groove part boundary gb1 and the groove part boundary gb2 are points on the sheet surfaces outside bending of the groove part side portion-side ridge portions 246 and 247, on the plane orthogonal to the longitudinal direction of the open cross section bumper reinforcement 200 at the center position in the longitudinal direction of the open cross section bumper reinforcement 200. Similarly, as illustrated in FIG. 5, the boundary b3 and the boundary b4 are points on the sheet surfaces of the ridge portion 232 outside bending on the plane orthogonal to the longitudinal direction of the open cross section bumper reinforcement 200 at the center position in the longitudinal direction of the open cross section bumper reinforcement 200. In addition, as illustrated in FIG. 5, the groove part boundary gb3 and the groove part boundary gb4 are points on the sheet surfaces outside bending of the groove part side portion-side ridge portions 256 and 257, respectively, on the plane orthogonal to the longitudinal direction of the open cross section bumper reinforcement 200 at the center position in the longitudinal direction of the open cross section bumper reinforcement 200.

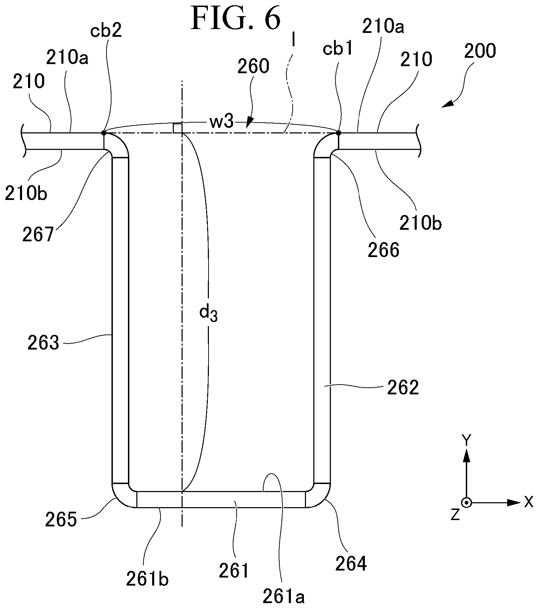

FIG. 6 is a cross section in the vicinity of the central groove part 260 of the open cross section bumper reinforcement 200 of FIG. 2. FIG. 6 is the cross section of the open cross section bumper reinforcement 200 of FIG. 1 at the center position in the longitudinal direction.

In the example of FIG. 6, the central groove part 260 has a central groove part bottom portion 261 and the pair of central groove part side portions 262 and 263. The central groove part bottom portion 261 is connected to the central groove part side portions 262 and 263 via the pair of central groove part bottom portion-side ridge portions 264 and 265 at end portions, respectively. The central groove part side portions 262 and 263 are connected to the first sheet portion 210 via the central groove part side portion-side ridge portions 266 and 267, respectively. The central groove part bottom portion 261, the central groove part side portions 262 and 263, the central groove part bottom portion-side ridge portions 264 and 265, and the central groove part side portion-side ridge portions 266 and 267 extend in the length direction of central groove part 260. Each of these ridge portions means a range where the radius of curvature R outside the ridge portion is 30 mm or less in the cross section of the open cross section bumper reinforcement 200. A point where the radius of curvature R exceeds 30 mm is regarded to be included in the central groove part bottom portion 261, the central groove part side portion 262, or the central groove part side portion 263. The central groove part bottom portion 261 has a central groove part bottom portion inner surface 261a located inside the central groove part 260 (on a side where the central groove part side portions 262 and 263 are located) and a central groove part bottom portion outer surface 261b opposite to the central groove part bottom portion inner surface 261a.

On the plane orthogonal to the longitudinal direction of the open cross section bumper reinforcement 200, boundaries between the first sheet portion 210 and the central groove part 260 are defined as a central groove part boundary cb1 and a central groove part boundary cb2. In the example of FIG. 2, the central groove part boundary cb1 is located on the groove part 240 side, and the central groove part boundary cb2 is located on the groove part 250 side. As illustrated in FIG. 6, the central groove part boundary cb1 and the central groove part boundary cb2 in the cross section at the center position in the longitudinal direction of the open cross section bumper reinforcement 200 are points on sheet surfaces outside bending of the central groove part side portion-side ridge portions 266 and 267, respectively.

A distance between the central groove part boundary cb1 and the central groove part boundary cb2 in the cross section of the open cross section bumper reinforcement 200 is defined as a width w3 of the central groove part 260. The width w3 of the central groove part 260 is not necessarily constant in the longitudinal direction of the open cross section bumper reinforcement 200.

A method of determining a depth of the central groove part 260 is similar to that in the case of the groove part 240 or the like. As illustrated in FIG. 6, a distance from an inner surface (the central groove part bottom portion inner surface 261a) of the groove part farthest from a straight line 1 to the straight line 1 in a direction orthogonal to the straight line 1 passing through the boundaries cb1 and cb2 on the plane orthogonal to the longitudinal direction of the open cross section bumper reinforcement 200 is defined as a depth d3 of the central groove part 260.

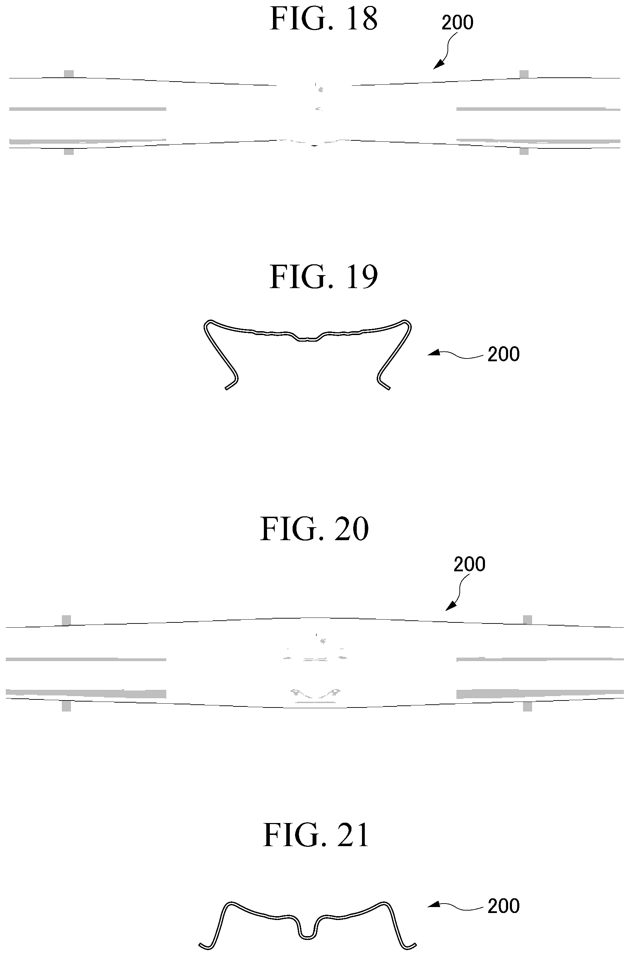

Here, FIGS. 18 to 21 are views illustrating deformation states of the open cross section bumper reinforcement 200 at a stroke of 70 mm when the depth d3 of the central groove part 260 is set to 10 mm and 21 mm. Note that an average sheet thickness t of the open cross section bumper reinforcement 200 is 1.4 mm. In other words, the depth d3 of the central groove part 260 in FIGS. 18 to 21 is 7.1t and 15t, respectively.

Note that the depth d1 of the groove part 240 and the depth d2 of the groove part 250 are each 8 mm in FIGS. 18 to 21. The other conditions are the same as the conditions in FIGS. 12 to 15 described above.

If the depth d3 of the central groove part 260 is not sufficient when an impact is absorbed, the first sheet portion 210 is deformed such that the width thereof is widened, and the second sheet portion 221 and the second sheet portion 222 are deformed to be closed as illustrated in FIGS. 18 and 19. Therefore, the depth d3 of the central groove part 260 is 15t or more in the cross section in the longitudinal direction of the open cross section bumper reinforcement 200 at the center position in the longitudinal direction of the open cross section bumper reinforcement 200. When the depth d3 of the central groove part 260 is 15t or more, the first sheet portion 210 is deformed such that the width thereof is narrowed, and the second sheet portion 221 and the second sheet portion 222 are deformed to be open as illustrated in FIGS. 20 and 21. Thus, there are an advantage that the strain generated at the time of collision can be suppressed and an advantage that a member proof stress is improved by enhancing the cross-sectional rigidity. Note that, if the depth d3 of the central groove part 260 is too deep, the mass increases as the central groove part side portions 262 and 263 of the central groove part 260 become larger. As a result, an energy absorption amount per mass decreases. Therefore, the depth d3 of the central groove part 260 is more preferably 15t to 25t. In other words, the depth of the groove part (the central groove part 260) at the center in the cross section of the center portion in the longitudinal direction of the open cross section bumper reinforcement 200 is 15 times or more and 25 times or less the sheet thickness of the first sheet portion 210. Note that the depth d3 of the central groove part 260 is not necessarily constant in the longitudinal direction of the open cross section bumper reinforcement 200.

As illustrated in FIG. 2, the central groove part 260 is located between the groove part 240 and the groove part 250. That is, in the cross section of the open cross section bumper reinforcement 200 at the center position in the longitudinal direction of the open cross section bumper reinforcement 200, the groove part 240, the central groove part 260, and the groove part 250 are located in this order from the ridge portion 231 side to the ridge portion 232 side with the first sheet portion 210 interposed therebetween. In the cross section at the center position in the longitudinal direction of the open cross section bumper reinforcement 200, the first sheet portion 210 is divided into four portions by the groove part 240, the groove part 250, and the central groove part 260.

In the embodiment, the above-described boundaries are also R stops on the sheet surfaces outside bending of the ridge portions.

A total length of the central groove part 260 is more preferably 50 to 90% of a total length of the ridge portion 231 or the ridge portion 232. As a result, high collision performance can be exhibited even in a case where the outside of the center portion of the open cross section bumper reinforcement 200 is subjected to collision deformation.

The average sheet thickness t of the first sheet portion 210 is determined by the following method. The sheet thickness of the first sheet portion 210 at any position excluding the groove part 240, the groove part 250, and the central groove part 260 in the cross section at the center position in the longitudinal direction of the open cross section bumper reinforcement 200 is measured at five or more points using a micrometer. The arithmetical mean of measured values of the sheet thickness at these points is defined as the average sheet thickness t.

Although the groove part 240, the groove part 250, and the central groove part 260 protrude to the side where the second sheet portion 221 and the second sheet portion 222 are located (the top sheet rear surface 210b side) from the first sheet portion 210 in the example of the embodiment, the groove part 240, the groove part 250, or the central groove part 260 may have shapes protruding to a side opposite to the side where the second sheet portion 221 and the second sheet portion 222 are located (the top sheet surface 210a side) from the first sheet portion 210. That is, the groove part 240, the groove part 250, or the central groove part 260 provided in the first sheet portion 210 may protrude to either the outside of the open cross section bumper reinforcement 200 or the inside of the open cross section bumper reinforcement 200. The groove part 240, the groove part 250, and the central groove part 260 may protrude in directions opposite to each other.

The open cross section bumper reinforcement 200 according to the embodiment has a tensile strength of 1470 MPa or more. That is, for example, tensile strengths of the first sheet portion 210 and the second sheet portions 221 and 222 are 1470 MPa or more. By setting the tensile strength of the open cross section bumper reinforcement 200 to 1470 MPa or more, a constant yield stress can be secured, and the strain can be suppressed. The tensile strength of the open cross section bumper reinforcement 200 is obtained as follows. Specifically, a sample having a size according to any one of a JIS No. 5 tensile test, a JIS No. 13B tensile test, and a JIS No. 14B tensile test is acquired from the first sheet portion 210 or the second sheet portions 221 and 222 of the open cross section bumper reinforcement 200, a tensile strength of the sample is measured by a technique according to JIS Z 2241 using a universal tester or a hydraulic servo type strength tester, and this tensile strength is defined as the tensile strength of the open cross section bumper reinforcement 200. Note that a micro tensile test piece may be used as the sample in a case where it is difficult to collect a test piece specified in JIS. In the micro tensile test, a width and a sheet thickness of a parallel part are preferably 0.2 to 2.0 mm, and the test piece preferably has a shape in which a uniform load is applied in the parallel part of the tensile test is preferable. The test piece machining is preferably wire-cut electrical discharge machining. As the micro tensile test piece, for example, a test piece of Journal of the Japan Welding Society, Vol. 75 (2006), Issue 6, pages 461 to 465 (https://www.jstage.jst.go.jp/article/jjws/75/6/75_6_461/_pdf/-char/ja) can be adopted.

Here, an extension length of a flat part between the ridge portion 231 and the groove part 240 in the cross section of the open cross section bumper reinforcement 200 according to the embodiment is denoted by L1. An extension length of a flat part between the ridge portion 232 and the groove part 250 is denoted by L2. An extension length of a flat part between the central groove part 260 and the groove part 240 is denoted by L3. An extension length of a flat part between the central groove part 260 and the groove part 250 is denoted by L4. In this case, a total extension length of L1, L2, L3, and L4 is more preferably 18% or less of an interval between the ridge portion 231 and the ridge portion 232.

That is, in the cross section in the longitudinal direction of the open cross section bumper reinforcement 200 at the center position in the longitudinal direction of the open cross section bumper reinforcement 200, a length of the first sheet portion 210 excluding the groove part 240, the groove part 250, and the central groove part 260 is more preferably 18% or less with respect to a length from the boundary b1 between the first sheet portion 210 and one ridge portion 231 to the boundary b3 between the first sheet portion 210 and the other ridge portion 232. As a result, a cross-sectional area of the entire open cross section bumper reinforcement 200 can be reduced, and performance per mass of the open cross section bumper reinforcement 200 can be enhanced.

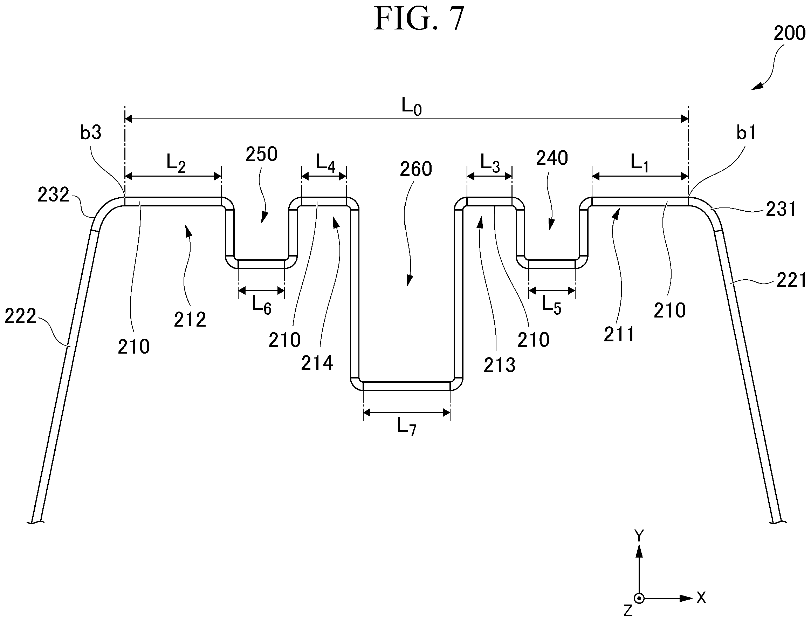

As illustrated in FIG. 7, the first sheet portion 210 is divided into four portions, that is, a range 211, a range 212, a range 213, and a range 214 by the groove part 240, the groove part 250, and the central groove part 260 in the cross section in the longitudinal direction of the open cross section bumper reinforcement 200 at the center position in the longitudinal direction of the open cross section bumper reinforcement 200. The length of the first sheet portion 210 excluding the groove part 240, the groove part 250, and the central groove part 260 is a total length of the lengths L1, L2, L3, and L4 of the range 211, the range 212, the range 213, and the range 214, respectively.

A straight-line distance L0 from the boundary b1 between the first sheet portion 210 and one ridge portion 231 to the boundary b3 between the first sheet portion 210 and the other ridge portion 232 in the cross section in the longitudinal direction of the open cross section bumper reinforcement 200 at the center position in the longitudinal direction of the open cross section bumper reinforcement 200 is defined as a length from the boundary b1 to the boundary b3.

The central groove part 260, the groove part 240, and the groove part 250 each have a flat bottom portion in the cross section of the open cross section bumper reinforcement 200 according to the embodiment.

Here, an extension length of the bottom portion of the central groove part 260 in the cross section of the open cross section bumper reinforcement 200 is denoted by L7. Extension lengths of the bottom portions of the groove part 240 and of the groove part 250 are denoted by L5 and L6, respectively. In this case, a total extension length of L1, L2, L3, L4, L5, L6, and L7 is more preferably 25% or less of the interval between the ridge portion 231 and the ridge portion 232.

That is, it is more preferable that the groove part 240, the groove part 250, and the central groove part 260 have flat bottom portions (the groove part bottom portion 241, the groove part bottom portion 251, and the central groove part bottom portion 261), respectively, and a total length of lengths of these bottom portions and a length of the first sheet portion 210 excluding the groove part 240, the groove part 250, and the central groove part 260 is 25% or less with respect to the length from the boundary b1 between the first sheet portion 210 and one ridge portion 231 to the boundary b3 between the first sheet portion 210 and the other ridge portion 232. As a result, it is possible to increase the radius of curvature of each ridge portion of the open cross section bumper reinforcement 200, to suppress a decrease in sheet thickness that occurs at the time of manufacturing the open cross section bumper reinforcement 200, and to exhibit component performance at the time of collision. Furthermore, when the above proportion is 25% or less, it is possible to avoid a disadvantage that a press load increases in the case of press molding due to the small radius of curvature of each ridge portion of the groove part 240, the groove part 250, and the central groove part 260.

As illustrated in FIG. 7, when the lengths of the groove part bottom portion 241, the groove part bottom portion 251, and the central groove part bottom portion 261 in the cross section in the longitudinal direction of the open cross section bumper reinforcement 200 at the center position in the longitudinal direction of the open cross section bumper reinforcement 200 are denoted by L5, L6, and L7, the total length of the lengths of the bottom portions (the groove part bottom portion 241, the groove part bottom portion 251, and the central groove part bottom portion 261) and the length of the first sheet portion 210 excluding the groove part 240, the groove part 250, and the central groove part 260 is a total length of L1, L2, L3, L4, L5, L6, and L7. In addition, the length L5 of the groove part bottom portion 241 or the length L6 of the groove part bottom portion 251 is more preferably 0 to 4t, and the length L7 of the central groove part bottom portion 261 is more preferably 0 to 6t.

Note that, in the example of the open cross section bumper reinforcement 200 according to the embodiment, the respective ranges of the first sheet portion 210, and the groove part bottom portion 241, the groove part bottom portion 251, and the central groove part bottom portion 261 are parallel to each other in the cross section at the center position in the longitudinal direction of the open cross section bumper reinforcement 200. However, these portions are not necessarily parallel to each other, and the above-described definition of the lengths can also be applied in such a case.

The length of the open cross section bumper reinforcement 200 according to the embodiment in the longitudinal direction is more preferably 700 to 1500 mm. In addition, in the open cross section bumper reinforcement 200 according to the embodiment, a length in the width direction of the first sheet portion 210 (the length from the boundary b1 to the boundary b3) is more preferably 30 to 160 mm. In addition, in the open cross section bumper reinforcement 200 according to the embodiment, lengths in the width directions of the second sheet portion 221 and the second sheet portion 222 are more preferably 30 to 160 mm.

In the open cross section bumper reinforcement 200 according to the embodiment, a deformation occurs when a certain load or more is applied in the direction orthogonal to the longitudinal direction of the open cross section bumper reinforcement 200 or in the longitudinal direction of the open cross section bumper reinforcement 200, and the ridge portions 231 and 232 move in deformation directions on the plane orthogonal to the longitudinal direction of the open cross section bumper reinforcement 200. At this time, a tensile force or a compression force is applied to the first sheet portion 210 or the second sheet portion 221 and the second sheet portion 221 connected to the ridge portions 231 and 232 in the direction orthogonal to the longitudinal direction of the open cross section bumper reinforcement 200. In the open cross section bumper reinforcement 200 according to the embodiment, the tensile force or the compression force is relaxed, a local deformation can be suppressed, and as a result, fracture caused by the deformation can be suppressed.

Since the groove parts and the central groove are appropriately provided in the first sheet portion 210, rigidity when the first sheet portion 210 is to be deformed out of a plane is enhanced. As a result, it is possible to increase the member proof stress of the open cross section bumper reinforcement 200 and the mass efficiency of absorbed energy. Furthermore, a deformation amount of the first sheet portion 210 until target performance is reached can be suppressed, and thus, the local deformation can be more effectively suppressed, and the fracture of a material can be reduced.

In the cross section of the open cross section bumper reinforcement 200 according to the embodiment described above, the widths of the groove part 240 and the groove part 250 are preferably 5 times or more and 30 times or less the sheet thickness of the open cross section bumper reinforcement 200. That is, the widths of the groove parts are preferably 5t to 30t. When the widths of the groove parts are 5t to 30t, there is an advantage that a local deformation occurring in a plane of the first sheet portion can be suppressed and the fracture can be more reliably suppressed.

In the open cross section bumper reinforcement according to the embodiment described above, the average sheet thickness t of the first sheet portion is preferably 0.8 to 2.3 mm in order to enhance the mass effect of the open cross section bumper reinforcement. When the average sheet thickness t is large, manufacturing is difficult since press forming loads of the groove parts and the central groove part increase, and further, member performance per mass hardly increases, so that the average sheet thickness t of the first sheet portion is more preferably 1.4 mm or less. In addition, the average sheet thickness t of the first sheet portion is more preferably 0.8 mm or more in order to exert collision performance by utilizing rigidity of the sheet thickness and further suppress the local deformation by the rigidity.

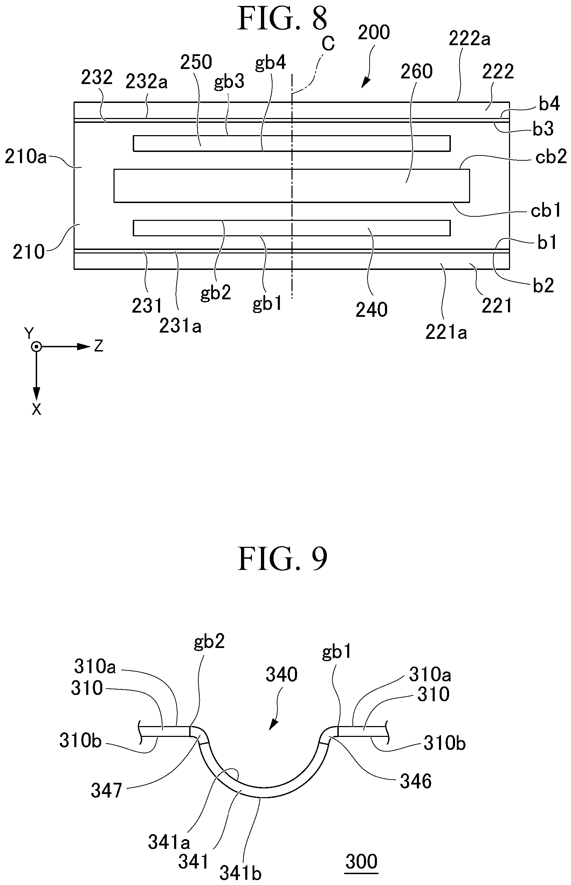

As illustrated in FIG. 8, the length of the groove part 240 or the groove part 250 may be shorter than the length of the first sheet portion 210, and the length of the central groove part 260 may be shorter than the length of the first sheet portion 210. The groove part 240 or the groove part 250 may extend in the entire longitudinal direction of the open cross section bumper reinforcement 200, and the central groove part 260 may extend in the entire longitudinal direction of the open cross section bumper reinforcement 200. The groove part 240, the groove part 250, or the central groove part 260 may extend so as to pass through the center position (a position of line c in FIG. 8) in the longitudinal direction of the open cross section bumper reinforcement 200.

In the open cross section bumper reinforcement according to the embodiment described above, a total length of the groove parts is preferably 50 to 90% of a total length of the ridge portions. When the total length of the groove parts is 50 to 90% of the total length of the ridge portions, high collision performance can be exhibited even in a case where the outside of the center portion of the open cross section bumper reinforcement is subjected to collision deformation.

In the open cross section bumper reinforcement according to the embodiment described above, the tensile strengths of the top sheet (the first sheet portion 210) and the two walls (the second sheet portions 221 and 222) are more preferably 1760 MPa or more. As a result, higher collision performance can be exhibited as compared with a material having a tensile strength of 1470 MPa or more.

In the open cross section bumper reinforcement according to the embodiment described above, a flange section may be formed at an edge portion on a side not connected to the ridge portion among the edge portions extending in the longitudinal direction of the first sheet portion or the second sheet portions.

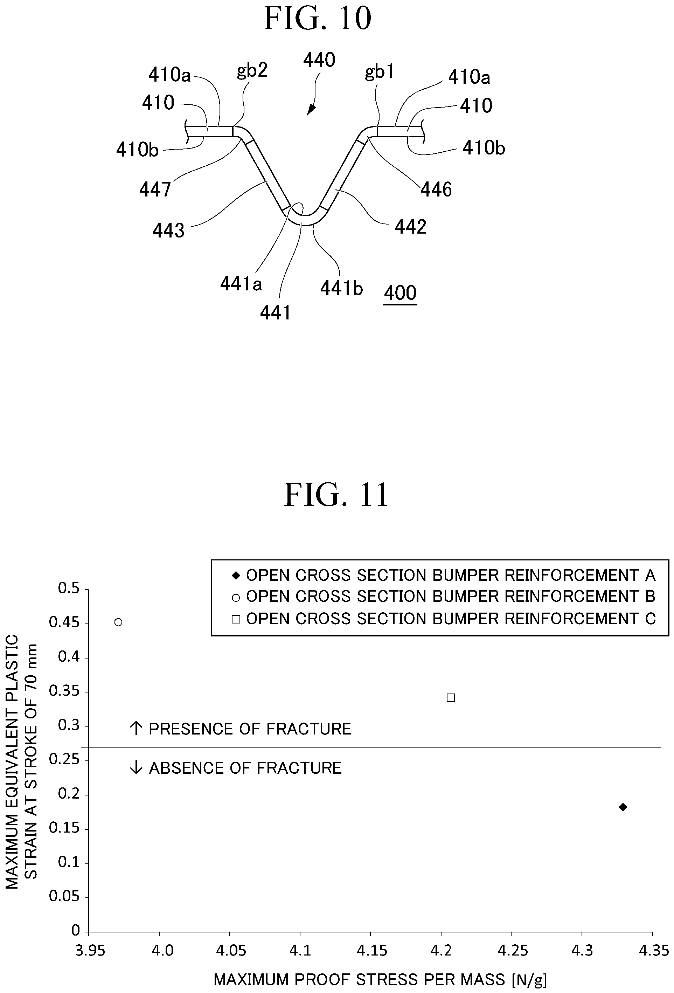

In the open cross section bumper reinforcement according to the embodiment described above, the groove parts or the central groove part may have a cross-sectional shape formed of a curve or a V-shaped cross-sectional shape including a curve in part as illustrated in FIG. 9 or 10. FIG. 9 is a cross section of an open cross section bumper reinforcement 300 at a center position in a longitudinal direction. As illustrated in FIG. 9, a groove part 340 provided in the open cross section bumper reinforcement 300 has a groove part bottom portion 341 whose cross section is formed of a curve. The groove part bottom portion 341 is connected to a first sheet portion 310 via a pair of groove part ridge portions 346 and 347 at end portions. In the open cross section bumper reinforcement 300, a face of the first sheet portion 310 outside a groove shape is referred to as a top sheet surface 310a, and a face of the first sheet portion 310 inside the groove shape is referred to as a top sheet rear surface 310b. The groove part bottom portion 341 has a bottom portion inner surface 341a located inside the groove part 340 and a bottom portion outer surface 341b opposite to the bottom portion inner surface. On a plane orthogonal to the longitudinal direction of the open cross section bumper reinforcement 300, one of boundaries between the first sheet portion 310 and the groove part 340 (boundaries between the first sheet portion 310 and each of the groove part ridge portions 346 and 347) is defined as the groove part boundary gb1 (the boundary between the first sheet portion 310 and the groove part ridge portion 346), and the other boundary (the boundary between the first sheet portion 310 and the groove part ridge portion 347) is defined as the groove part boundary gb2. The groove part boundary gb1 and the groove part boundary gb2 are points on the sheet surfaces outside bending of the groove part ridge portions 346 and 347, respectively, on the plane orthogonal to the longitudinal direction of the open cross section bumper reinforcement 300 at the center position in the longitudinal direction of the open cross section bumper reinforcement 300. A distance between the groove part boundary gb1 and the groove part boundary gb2 on the plane orthogonal to the longitudinal direction of the open cross section bumper reinforcement 300 is defined as a width of the groove part 340. The width of the groove part 340 is not necessarily constant in the longitudinal direction of the open cross section bumper reinforcement 300. In addition, a distance from an inner surface (the bottom portion inner surface 341a) of the groove part farthest from a straight line to the straight line in a direction orthogonal to the straight line (not illustrated) passing through the boundaries gb1 and gb2 is defined as a depth of the groove part 340 on the plane orthogonal to the longitudinal direction of the open cross section bumper reinforcement 300.

FIG. 10 is a cross section of an open cross section bumper reinforcement 400 at a center position in a longitudinal direction. As illustrated in FIG. 10, a groove part 440 provided in the open cross section bumper reinforcement 400 has a groove part bottom portion 441 whose cross section is formed of a curve and a pair of groove part side portions 442 and 443. The groove part bottom portion 441 is connected to the groove part side portions 442 and 443, and the groove part side portions 442 and 443 are connected to a first sheet portion 410 via groove part ridge portions 446 and 447, respectively. In the open cross section bumper reinforcement 400, a face of the first sheet portion 410 outside a groove shape is referred to as a top sheet surface 410a, and a face of the first sheet portion 410 inside the groove shape is referred to as a top sheet rear surface 410b. The groove part bottom portion 441 has a bottom portion inner surface 441a located inside the groove part 440 and a bottom portion outer surface 441b opposite to the bottom portion inner surface. On a plane orthogonal to the longitudinal direction of the open cross section bumper reinforcement 400, one of boundaries between the first sheet portion 410 and the groove part 440 (boundaries between the first sheet portion 410 and each of the groove part ridge portions 446 and 447) is defined as the groove part boundary gb1 (the boundary between the first sheet portion 410 and the groove part ridge portion 446), and the other boundary (the boundary between the first sheet portion 410 and the groove part ridge portion 447) is defined as the groove part boundary gb2. The groove part boundary gb1 and the groove part boundary gb2 in a cross section at the center position in the longitudinal direction of the open cross section bumper reinforcement 400 are points on sheet surfaces outside bending of the groove part ridge portions 446 and 447. A distance between the groove part boundary gb1 and the groove part boundary gb2 in the cross section of the open cross section bumper reinforcement 400 is defined as a width of the groove part 440. The width of the groove part 440 is not necessarily constant in the longitudinal direction of the open cross section bumper reinforcement 400. In addition, a distance from an inner surface (the bottom portion inner surface 441a) of the groove part farthest from a straight line to the straight line in a direction orthogonal to the straight line (not illustrated) passing through the boundaries gb1 and gb2 is defined as a depth of the groove part 440 in the cross section of the open cross section bumper reinforcement 400. Note that also in the case of the shape illustrated in FIG. 9 or 10, the definition of the ridge portion of the groove part is the same as that in the embodiment described above.

The open cross section bumper reinforcement according to the embodiment described above is preferably used as a vehicle member of a front bumper reinforcement or a rear bumper reinforcement.

### [Manufacturing Method]

The open cross section bumper reinforcement according to the embodiment described above may be manufactured by subjecting one steel sheet to hot stamping, cold pressing, roll forming, or extrusion molding.

### [Examples]

### (Example 1)

In Example 1, the performance of the open cross section bumper reinforcement according to the embodiment described above was evaluated by changing a position and a depth of a groove part of an open cross section bumper reinforcement having a shape as illustrated in FIG. 1 or the like in a CAE simulation.

In the present example, the sheet thickness t of the open cross section bumper reinforcement was set to 1.4 mm.

In a cross section at a center position in a longitudinal direction of the open cross section bumper reinforcement, a width of the groove part was set to 30 mm, and a radius of curvature of outside a ridge portion of a groove part side portion-side ridge portion was set to 8 mm. In addition, a radius of curvature of a ridge outer surface of a ridge portion connecting a first sheet portion and a second sheet portion was set to 9.4 mm, a length in a width direction of the second sheet portion was set to 50 mm, and an angle between a sheet surface of the first sheet portion and a sheet surface of the second sheet portion was set to 96 degrees. In addition, a length in the longitudinal direction of the open cross section bumper reinforcement was set to 1400 mm, and a length of the groove part in the longitudinal direction of the open cross section bumper reinforcement was set to 100% of the length of the open cross section bumper reinforcement. These lengths and the like are defined as described in the embodiment. Note that an open cross section bumper reinforcement of Comparative Example 1 was not provided with any groove part.

A tensile strength in each experimental example was obtained as shown in Table 1. As material data used for the CAE simulation, a prototype open cross section bumper reinforcement was prepared for each material having different strength classes, a sample having a size according to a JIS No. 4 test piece was acquired from a second sheet portion, and a tensile strength of this sample was measured by a method according to JIS Z 2241 using a universal tester (SDW-9103 manufactured by IMADA-SS Corporation).

In each experimental example, a distance L from a boundary between a first sheet portion and a ridge portion to a groove part boundary in a direction parallel to a top sheet surface and a top sheet rear surface in a cross section at a center position in a longitudinal direction of the open cross section bumper reinforcement was as set as shown in Table 1. As described in the embodiment, the distance L was defined from the boundary between the first sheet portion and the ridge portion to the groove part boundary (a boundary closer to the ridge portion between boundaries between the first sheet portion and a groove part) in the direction parallel to a sheet surface of the first sheet portion in the cross section at the center position in the longitudinal direction of the open cross section bumper reinforcement. The distance L is indicated as a multiple of the sheet thickness t.

In each experimental example, a depth of the groove part in the cross section at the center position in the longitudinal direction of the open cross section bumper reinforcement was set as shown in Table 1. As described in the embodiment, the depth d was set as a distance from an inner surface of the groove part farthest from a straight line to the straight line in a direction orthogonal to the straight line passing through two boundaries in the cross section of the open cross section bumper reinforcement.

The depth d is indicated as a multiple of the sheet thickness t.

In addition, the performance of the open cross section bumper reinforcement of each experimental example was measured. In the evaluation of component performance of an impact absorbing portion in the present example, a maximum reaction force per mass of a member and maximum equivalent plastic strain generated up to a stroke of 70 mm were measured, and a case where a result with the maximum reaction force of 5.5 (N/g) or more and the maximum equivalent plastic strain of 0.3 or less was obtained was evaluated as "Good", and a case where a result other than these ranges was obtained was evaluated as "No good".

**[Table 1]**

| | Tensile strength (MPa) | Distance L | Groove part depth d | Component performance |
|---|---|---|---|---|
| Invention Example 1 | 1760 | 15t | 2t | Good |
| Invention Example 2 | 1470 | 15t | 2t | Good |
| Invention Example 3 | 1470 | 15t | 7t | Good |
| Invention Example 4 | 1470 | 15t | 13t | Good |
| Invention Example 5 | 1470 | 30t | 2t | Good |
| Invention Example 6 | 1470 | 30t | 7t | Good |
| Invention Example 7 | 1470 | 30t | 13t | Good |
| Comparative Example 1 | 1470 | (Absence of groove part) | 0t (Absence of groove part) | No good |
| Comparative Example 2 | 1470 | 30t | 1t | No good |
| Comparative Example 3 | 1470 | 30t | 14t | No good |
| Comparative Example 4 | 1470 | 31t | 10t | No good |
| Comparative Example 5 | 1470 | 31t | 13t | No good |
| Comparative Example 6 | 1470 | 35t | 10t | No good |
| Comparative Example 7 | 1470 | 35t | 13t | No good |
| Comparative Example 8 | 1310 | 15t | 2t | No good |
| Comparative Example 9 | 1310 | 15t | 7t | No good |
| Comparative Example 10 | 1310 | 15t | 13t | No good |
| Comparative Example 11 | 1310 | 30t | 2t | No good |
| Comparative Example 12 | 1310 | 30t | 7t | No good |
| Comparative Example 13 | 1310 | 30t | 13t | No good |
| Comparative Example 14 | 1310 | 30t | 1t | No good |
| Comparative Example 15 | 1310 | 30t | 14t | No good |
| Comparative Example 16 | 1310 | 31t | 10t | No good |
| Comparative Example 17 | 1310 | 31t | 13t | No good |
| Comparative Example 18 | 1310 | 35t | 10t | No good |
| Comparative Example 19 | 1310 | 35t | 13t | No good |

As shown in Table 1, it is understood that open cross section bumper reinforcements of Invention Examples 1 to 7 according to the present disclosure have good component performance.

### (Example 2)

In Example 2, the performance of the open cross section bumper reinforcement according to the embodiment described above was evaluated. Specifically, for the open cross section bumper reinforcement having the shape as illustrated in FIG. 1 or the like and an open cross section bumper reinforcement provided with one or two groove parts, plastic strain when subjected to a deformation of a predetermined stroke was measured.

In the present example, the sheet thickness t of the open cross section bumper reinforcement was set to 1.4 mm. A method of measuring a sheet thickness similar to that in Example 1 was used.

An open cross section bumper reinforcement A were provided with two groove parts and a central groove part located between these groove parts as illustrated in FIG. 1 or the like. In the open cross section bumper reinforcement A, in a cross section at a center position in a longitudinal direction, widths of the two groove parts were set to 17 mm and depths were set to 5.7t, and a width of the central groove part were set to 35 mm and a depth was set to 16t,. In addition, each of a distance L1 and a distance L2 from a boundary between a first sheet portion and a ridge portion to a groove part boundary in a direction parallel to a top sheet surface and a top sheet rear surface in the cross section at the center position in the longitudinal direction of the open cross section bumper reinforcement was set to 5t (≤ 30t).

An open cross section bumper reinforcement B was provided with two groove parts. In the open cross section bumper reinforcement B, widths of the two groove parts were set to 17 mm and depths were set to 16t, in a cross section at a center position in a longitudinal direction. Each distance from a boundary between a first sheet portion and a ridge portion to a groove part boundary (a boundary closer to the ridge portion between boundaries between the first sheet portion and the groove part) in a direction parallel to a top sheet surface and a top sheet rear surface was set to 31t (> 30t).

An open cross section bumper reinforcement C was provided with one groove part. In the open cross section bumper reinforcement C, a width of the groove part were set to 17 mm and a depth was set to 16t, in a cross section at a center position in a longitudinal direction. A distance from a boundary between a first sheet portion and a ridge portion to a groove part boundary in a direction parallel to a top sheet surface and a top sheet rear surface was set to 40t (> 30t).

In each of the open cross section bumper reinforcements A to C, a radius of curvature of outside a ridge portion of a groove part side portion-side ridge portion was set to 9.4 mm, and a radius of curvature of outside a ridge portion of a central groove part side portion-side ridge portion was set to 9.4 mm. In addition, a radius of curvature of a ridge outer surface of each of ridge portions connecting the first sheet portion and each of second sheet portions was set to 9.4 mm, a length in a width direction of the first sheet portion was set to 130 mm, lengths in width directions of the two second sheet portions were set to 66 mm, and an angle between a sheet surface of the first sheet portion and a sheet surface of each of the second sheet portions was set to 96 degrees. In addition, a length in the longitudinal direction of the open cross section bumper reinforcement was set to 1400 mm, and a length of the groove part in the longitudinal direction of the open cross section bumper reinforcement was set to 100% of the length of the open cross section bumper reinforcement. These lengths and the like are defined as described in the embodiment.

In addition, the open cross section bumper reinforcements A to C each set to had a tensile strength of 2000 MPa. A method of measuring a tensile strength similar to that in Example 1 was used.

For the open cross section bumper reinforcements A to C as described above, a three-point bending test in which a center portion of the open cross section bumper reinforcement was pressed down was performed using a CAE simulation. From results of this test, a maximum load per mass and a deformation up to a stroke of 70 mm were calculated for each of the open cross section bumper reinforcements A to C, and from these, maximum equivalent plastic strain at the stroke of 70 mm was calculated. The results are shown in FIG. 11.

The reason for adopting the maximum equivalent plastic strain at the stroke of 70 mm is as follows. When a deformation amount reaches the stroke of 70 mm, a peak of a load of the open cross section bumper reinforcement is exceeded, and thus, the stroke of 70 mm is a stroke amount satisfying proof stress performance of the open cross section bumper reinforcement. On the other hand, regarding fracture, since the deformation progresses to the stroke of 70 mm and there is a possibility that the strain increases, a risk of fracture was determined by the maximum equivalent plastic strain amount at the stroke of 70 mm. As a reference for determining the risk of fracture, it was determined that there was the risk of fracture in a case where the maximum equivalent plastic strain amount at the stroke of 70 mm exceeded 0.26.

As illustrated in FIG. 11, the strain amount of the open cross section bumper reinforcement A is the reference or less, and it is understood that the risk of fracture is suppressed as compared with the open cross section bumper reinforcement B or C.

As illustrated in FIG. 11, in the open cross section bumper reinforcement A according to the present disclosure, a maximum proof stress per mass is 4.32 (N/g). From this, it is understood that the present disclosure can provide a structure that has a low risk of fracture and enhances the mass efficiency with respect to the maximum load.

### (Example 3)

In Example 3, the performance of the open cross section bumper reinforcement according to the embodiment described above was evaluated by changing positions and depths of groove parts and a central groove part of an open cross section bumper reinforcement having a shape as illustrated in FIG. 1 or the like in a CAE simulation.

In the present example, the sheet thickness t of the open cross section bumper reinforcement was set to 1.4 mm.

In a cross section at a center position in a longitudinal direction of the open cross section bumper reinforcement, widths of the two groove parts were set to 15 mm, and a radius of curvature of outside a ridge portion of a groove part side portion-side ridge portion was set to 5 mm. In addition, a width of the central groove part was set to 15 mm, and a radius of curvature of outside a ridge portion of a central groove part side portion-side ridge portion was set to 5 mm. In addition, radii of curvature of ridge outer surfaces of two ridge portions connecting the first sheet portion and second sheet portions were set to 9.4 mm, a length in a width direction of the first sheet portion was set to 140 mm, lengths in width directions of the two second sheet portions were set to 50 mm, and an angle between a sheet surface of the first sheet portion and a sheet surface of each of the second sheet portions was set to 96 degrees. In addition, a length in the longitudinal direction of the open cross section bumper reinforcement was set to 1400 mm, and a length of the groove part in the longitudinal direction of the open cross section bumper reinforcement was set to 100% of the length of the open cross section bumper reinforcement. These lengths and the like are defined as described in the embodiment. Note that open cross section bumper reinforcements of Comparative Example 2 and Example 3 were not provided with any groove part.

A tensile strength in each experimental example was set as shown in Table 2. A method of measuring a tensile strength similar to that in Example 1 was used.

In each experimental example, a distance L1 and a distance L2 from a boundary between the first sheet portion and each of the ridge portions to each of groove part boundaries in a direction parallel to a top sheet surface and a top sheet rear surface in the cross section at the center position in the longitudinal direction of the open cross section bumper reinforcement were set as shown in Table 2.

As described in the embodiment, the distance L1 or the distance L2 was defined from the boundary between the first sheet portion and the ridge portion to the groove part boundary (a boundary closer to the ridge portion between boundaries between the first sheet portion and a groove part) in the direction parallel to a sheet surface of the first sheet portion in the cross section at the center position in the longitudinal direction of the open cross section bumper reinforcement. The distance L1 or the distance L2 is indicated as a multiple of the sheet thickness t.

A depth (d1 or d2) of the groove part and a depth d3 of the central groove part in the cross section at the center position in the longitudinal direction of the open cross section bumper reinforcement in each experimental example were set as shown in Table 2. As described in the embodiment, each of the depths d1 to d3 was set as a distance from an inner surface of the groove part farthest from a straight line to the straight line in a direction orthogonal to the straight line passing through two boundaries in the cross section of the open cross section bumper reinforcement. The depths d1 to d3 are indicated as multiples of the sheet thickness t.

In addition, the performance of the open cross section bumper reinforcement of each experimental example was measured. In the evaluation of component performance of an impact absorbing portion in the present example, a maximum reaction force per mass of a member and maximum equivalent plastic strain generated up to a stroke of 70 mm were measured, and a case where a result with the maximum reaction force of 5.5 (N/g) or more and the maximum equivalent plastic strain of 0.3 or less was obtained was evaluated as "Good", and a case where a result other than these ranges was obtained was evaluated as "No good".

**[Table 2]**

| | Tensile strength (MPa) | Distances L1 and L2 | Groove part depths d1 and d2 | Central groove part depth d3 | Component performance |
|---|---|---|---|---|---|
| Invention Example 1 | 1760 | 15t | 2t | 20t | Good |
| Invention Example 2 | 1760 | 15t | 2t | 15t | Good |
| Invention Example 3 | 1470 | 15t | 2t | 15t | Good |
| Invention Example 4 | 1470 | 15t | 7t | 15t | Good |
| Invention Example 5 | 1470 | 15t | 13t | 15t | Good |
| Invention Example 6 | 1470 | 30t | 2t | 15t | Good |
| Invention Example 7 | 1470 | 30t | 7t | 15t | Good |
| Invention Example 8 | 1470 | 30t | 13t | 20t | Good |
| Invention Example 9 | 1470 | 30t | 13t | 15t | Good |
| Comparative Example 1 | 1470 | 30t | 13t | 14t | No good |
| Comparative Example 2 | 1470 | (Absence of groove part) | 0t (Absence of groove part) | 15t | No good |
| Comparative Example 3 | 1470 | (Absence of groove part) | 0t (Absence of groove part) | 14t | No good |
| Comparative Example 4 | 1470 | 30t | 1t | 15t | No good |
| Comparative Example 5 | 1470 | 30t | 1t | 14t | No good |
| Comparative Example 6 | 1470 | 30t | 14t | 15t | No good |
| Comparative Example 7 | 1470 | 30t | 14t | 14t | No good |
| Comparative Example 8 | 1470 | 31t | 10t | 15t | No good |
| Comparative Example 9 | 1470 | 31t | 10t | 14t | No good |
| Comparative Example 10 | 1470 | 31t | 13t | 15t | No good |
| Comparative Example 11 | 1470 | 31t | 13t | 14t | No good |
| Comparative Example 12 | 1470 | 35t | 10t | 15t | No good |
| Comparative Example 13 | 1470 | 35t | 10t | 14t | No good |
| Comparative Example 14 | 1470 | 35t | 13t | 15t | No good |
| Comparative Example 15 | 1470 | 35t | 13t | 14t | No good |
| Comparative Example 16 | 1310 | 15t | 2t | 15t | No good |
| Comparative Example 17 | 1310 | 15t | 2t | 14t | No good |
| Comparative Example 18 | 1310 | 15t | 7t | 15t | No good |
| Comparative Example 19 | 1310 | 15t | 7t | 14t | No good |
| Comparative Example 20 | 1310 | 15t | 13t | 15t | No good |
| Comparative Example 21 | 1310 | 15t | 13t | 14t | No good |
| Comparative Example 22 | 1310 | 30t | 2t | 15t | No good |
| Comparative Example 23 | 1310 | 30t | 2t | 14t | No good |
| Comparative Example 24 | 1310 | 30t | 7t | 15t | No good |
| Comparative Example 25 | 1310 | 30t | 7t | 14t | No good |
| Comparative Example 26 | 1310 | 30t | 13t | 15t | No good |
| Comparative Example 27 | 1310 | 30t | 13t | 14t | No good |
| Comparative Example 28 | 1310 | 30t | 1t | 15t | No good |
| Comparative Example 29 | 1310 | 30t | 1t | 14t | No good |
| Comparative Example 30 | 1310 | 30t | 14t | 15t | No good |
| Comparative Example 31 | 1310 | 30t | 14t | 14t | No good |
| Comparative Example 32 | 1310 | 31t | 10t | 15t | No good |
| Comparative Example 33 | 1310 | 31t | 10t | 14t | No good |
| Comparative Example 34 | 1310 | 31t | 13t | 15t | No good |
| Comparative Example 35 | 1310 | 31t | 13t | 14t | No good |
| Comparative Example 36 | 1310 | 35t | 10t | 15t | No good |
| Comparative Example 37 | 1310 | 35t | 10t | 14t | No good |
| Comparative Example 38 | 1310 | 35t | 13t | 15t | No good |

As shown in Table 2, it is understood that open cross section bumper reinforcements of Invention Examples 1 to 7 according to the present disclosure have good component performance.

### (Example 4)

In Example 4, similarly to Example 3, regarding an open cross section bumper reinforcement having a shape as illustrated in FIG. 1 or the like, the performance of the open cross section bumper reinforcement was evaluated by changing a ratio of a length of a first sheet portion excluding two groove parts and a central groove part to a length from a boundary between the first sheet portion and one ridge portion to a boundary with respect to the other ridge portion.

In the present example, the sheet thickness t of the open cross section bumper reinforcement was set to 1.4 mm.

In a cross section at a center position in a longitudinal direction of the open cross section bumper reinforcement, widths of the two groove parts were set to 20 mm, and a radius of curvature of outside a ridge portion of a groove part side portion-side ridge portion was set to 5 mm. In addition, a width of the central groove part was set to 44 mm, and a radius of curvature of outside a ridge portion of a central groove part side portion-side ridge portion was set to 5 mm. In addition, radii of curvature of ridge outer surfaces of two ridge portions connecting the first sheet portion and second sheet portions were set to 9.4 mm, a length in a width direction of the first sheet portion was set to 103.3 mm in Invention Examples 1 to 3 and 104.7 mm in Invention Examples 4 to 6, lengths in width directions of the two second sheet portions were set to 50 mm, and an angle between a sheet surface of the first sheet portion and a sheet surface of each of the second sheet portions was set to 96 degrees. In addition, a length in the longitudinal direction of the open cross section bumper reinforcement was set to 1400 mm, and a length of the groove part in the longitudinal direction of the open cross section bumper reinforcement was set to 100% of the length of the open cross section bumper reinforcement. These lengths and the like are defined as described in the embodiment.

A tensile strength in each experimental example was 1470 MPa. A method of measuring a tensile strength similar to that in Example 1 was used.

In each experimental example, a distance L1 and a distance L2 from a boundary between the first sheet portion and each of the ridge portions to each of groove part boundaries in a direction parallel to a top sheet surface and a top sheet rear surface in the cross section at the center position in the longitudinal direction of the open cross section bumper reinforcement were set as shown in Table 3 or Table 4. The definition of a distance L1 or a distance L2 is similar to that in Example 3. The distance L1 or the distance L2 is indicated as a multiple of the sheet thickness t.

A depth (d1 or d2) of the groove part and a depth d3 of the central groove part in the cross section at the center position in the longitudinal direction of the open cross section bumper reinforcement in each experimental example were set as shown in Table 3 or Table 4. The definitions of the depths d1 to d3 are similar to those in Example 3. The depths d1 to d3 are indicated as multiples of the sheet thickness t.

In the cross section at the center position in the longitudinal direction of the open cross section bumper reinforcement, the first sheet portion was divided into four portions by the two groove parts and the central groove part, lengths of the divided first sheet portions were denoted by L1, L2, L3, and L4, respectively, and lengths of the two groove part bottom portions and the central groove part bottom portions in the same cross section view were denoted by L5, L6, and L7, respectively. In addition, the straight-line distance L0 from the boundary between the first sheet portion and one ridge portion to the boundary between the first sheet portion and the other ridge portion in the same cross section view was defined as a length from the boundary to the boundary.

Table 3 shows a ratio of (L1 + L2 + L3 + L4) to L0 in each experimental example.

Table 4 shows a ratio of (L1 + L2 + L3 + L4 + L5 + L6 + L7) to L0 in each experimental example.

In addition, the performance of the open cross section bumper reinforcement of each experimental example was measured. In the evaluation of component performance of an impact absorbing portion of the present example, a maximum load and maximum equivalent plastic strain at a stroke of 70 mm were evaluated, and a case where a result with a maximum reaction force of 5.5 (N/g) or more and the maximum equivalent plastic strain of 0.3 or less was obtained was evaluated as "Good", and a case where a result with the maximum reaction force of 5.5 (N/g) or more and the maximum equivalent plastic strain of 0.25 or less was obtained was evaluated as "Very Good".

**[Table 3]**

| | Distances L1 and L2 | Groove part depths d1 and d2 | Central groove part depth d3 | Ratio of (L1+L2+L3+L4) to L0 | Component performance |
|---|---|---|---|---|---|
| Invention Example 1 | 5t | 2t | 15t | 18.0% | Very Good |
| Invention Example 2 | 5t | 7t | 15t | 18.0% | Very Good |
| Invention Example 3 | 5t | 13t | 15t | 18.0% | Very Good |
| Invention Example 4 | 5t | 2t | 15t | 19.1% | Good |
| Invention Example 5 | 5t | 7t | 15t | 19.1% | Good |
| Invention Example 6 | 5t | 13t | 15t | 19.1% | Good |

As shown in Table 3, it is understood that the member proof stress is improved by setting the ratio of (L1 + L2 + L3 + L4) to L0 to 18% or less. It is considered that a total amount of proof stresses of ridge portions increases by increasing a ratio of the ridge portions of the groove parts in the cross section of the open cross section bumper reinforcement, and as a result, the member proof stress is improved.

**[Table 4]**

| | Distances L1 and L2 | Groove part depths d1 and d2 | Central groove part depth d3 | Ratio of (L1+L2+L3+L4+L5+ L6+L7) to L0 | Component performance |
|---|---|---|---|---|---|
| Invention Example 1 | 5t | 2t | 15t | 25.0% | Very Good |
| Invention Example 2 | 5t | 7t | 15t | 25.0% | Very Good |
| Invention Example 3 | 5t | 13t | 15t | 25.0% | Very Good |
| Invention Example 4 | 5t | 2t | 15t | 26.0% | Good |
| Invention Example 5 | 5t | 7t | 15t | 26.0% | Good |
| Invention Example 6 | 5t | 13t | 15t | 26.0% | Good |

As shown in Table 4, it is understood that the member proof stress is improved by setting the ratio of (L1 + L2 + L3 + L4 + L5 + L6 + L7) to L0 to 25% or less. It is considered that a total amount of proof stresses of ridge portions increases by increasing a ratio of the ridge portions of the groove parts in the cross section of the open cross section bumper reinforcement, and as a result, the member proof stress is improved.

### [Field of Industrial Application]

The open cross section bumper reinforcement of the present disclosure can suppress the fracture caused by the deformation generated when the member receives the impact, and thus, is industrially extremely useful.

### [Brief Description of the Reference Symbols]

200 Open cross section bumper reinforcement
210 First sheet portion
221, 222 Second sheet portion
231, 232 Ridge portion
240, 250 Groove part
241, 251 Groove part bottom portion
242, 243, 252, 253 Groove part side portion
244, 245, 254, 255 Groove part bottom portion-side ridge portion
246, 247, 256, 257 Groove part side portion-side ridge portion
260 Central groove part
261 Central groove part bottom portion
262, 263 Central groove part side portion
264, 265 Central groove part bottom portion-side ridge portion
266, 267 Central groove part side portion-side ridge portion

## Claims

1. An open cross section bumper reinforcement comprising
a top sheet, two walls, and two ridge portions, wherein
tensile strengths of the top sheet and the walls are 1470 MPa or more,
each of the two ridge portions extend between the top sheet and the walls, in a longitudinal direction of the top sheet,
a cross section of a center portion in the longitudinal direction is an open cross section having a groove shape,
in the cross section, the top sheet includes a central groove part extending in the longitudinal direction at a center of a width,
in the cross section, the top sheet includes a small groove part between the central groove part and each of the ridge portions,
in the cross section, a depth of the central groove part at the center is 15 times or more and 25 times or less a sheet thickness of the top sheet,
a depth of each of the small groove parts is 2 times or more and 13 times or less the sheet thickness of the top sheet, and
an interval between each of the small groove parts and each of the ridge portions is 30 times or less the sheet thickness of the top sheet.

2. The open cross section bumper reinforcement according to claim 1, wherein
in the cross section,
a total of an extension length of a flat part (L1, L2) between each of the ridge portions and each of the small groove parts and an extension length of a flat part (L3, L4) between the central groove part and each of the small groove parts is 18% or less of an interval between the ridge portions.

3. The open cross section bumper reinforcement according to claim 1, wherein
in the cross section,
each of the central groove part and each of the small groove parts includes a flat bottom portion, and
a total of an extension length (L7) of the bottom portion of the central groove part, an extension length of the bottom portion (L5, L6) of each of the small groove parts, an extension length of a flat part (L1, L2) between each of the ridge portions and each of the small groove parts, and an extension length of the flat part (L3, L4) between the central groove part and each of the small groove parts is 25% or less of an interval between the ridge portions.

4. The open cross section bumper reinforcement according to any one of claims 1 to 3, wherein
in the cross section,
a width of each of the small groove parts is 5 times or more and 30 times or less the sheet thickness.

5. The open cross section bumper reinforcement according to any one of claims 1 to 4, wherein
the tensile strengths of the top sheet and the walls are 1760 MPa or more.
